# FASCICULE DE BREVET EUROPEEN

(11) **EP 1 415 800 B1**
(45) Date de publication et mention de la délivrance du brevet: **11.05.2005**
(21) Numéro de dépôt: 03292643.8
(22) Date de dépôt: 22.10.2003
(51) Int. Cl.: B32B 21/04, E04F 15/04

(54) **Revêtement de surface traité contre l'humidité et procédé de traitement**
Gegen Feuchtigkeit behandelte Oberflächenbeschichtung sowie Behandlungsverfahren
Surface coating treated against humidity and method of treating

(30) Priorité: 30.10.2002 FR 0213609
(43) Date de publication de la demande: 06.05.2004
(73) Titulaire: Tarkett SAS, 92000 Nanterre (FR)
(72) Inventeur: Lepetit, Hervé, 92000 Nanterre (FR)
(74) Mandataire: Arnaud, Jean

(56) Documents cités:
- WO-A-82/04223
- DE-U- 20 002 744
- PATENT ABSTRACTS OF JAPAN vol. 2000, no. 17, 5 juin 2001 (2001-06-05) & JP 01 136704 A (MATSUSHITA ELECTRIC WORKS LTD), 30 mai 1989 (1989-05-30)

## Description

L'invention concerne la réalisation de panneaux pour revêtir une surface, en particulier un sol.

Plus précisément, il s'agit de panneaux définissant des éléments adaptés pour être reliés entre eux afin de constituer le revêtement, lequel a un but de décoration et/ou de protection de la surface concernée.

Les panneaux en cause comprennent une première couche rigide et dure, et au moins une deuxième couche sous-jacente ligno-cellulosique, mécaniquement résistante, rigide, de support de la première couche et liée à elle, typiquement par collage sous pression.

Les fibres de bois, sous différentes formes (sciure, copeaux, ...) sont fréquemment utilisées avec, pour liant, des résines thermodurcissables ou thermoplastiques pour produire des matériaux couramment appelés "agglomérés".

Un défaut notable de tels panneaux est leur très mauvaise tenue à l'eau ou à l'humidité, avec pour conséquence une diminution notable de leur propriété mécanique et de leur résistance à l'altération chimique, lorsqu'ils sont mouillés. A cela s'ajoute une difficulté importante à contrôler leurs variations dimensionnelles. Ils sont donc très sensibles à l'état hygrométrique de leur environnement.

On connaît également une utilisation des fibres ligno-cellulosiques en tant que charges, typiquement sous forme de poudre, dans les polymères.

L'invention a pour objet de proposer un élément de revêtement de surface (panneau), et donc le revêtement en lui-même, ainsi qu'un procédé permettant d'améliorer la résistance à la déformation et aux agents biologiques de structures à base de fibres ligno-cellulosiques, en particulier dans le cadre de la fabrication de planchers, en particulier flottants, en bois ou comprenant du bois.

Dans de but, une caractéristique importante de l'invention consiste en ce que le revêtement, ou l'élément de panneau, conforme à l'invention, soit tel qu'au moins la deuxième couche de chaque panneau soit une couche ayant été traitée chimiquement, avec un agent anti-gonflement, ou une couche rétifiée ayant été traitée thermiquement pour limiter les variations dimensionnelles de cette deuxième couche en cas d'une humidité telle qu'elle aurait entraîné des déformations si la couche n'avait pas été traitée.

Dans une réalisation structurelle préférée appliquée tout particulièrement aux planchers, une caractéristique complémentaire de l'invention prévoit, pour l'obtention d'un produit performant évitant que la première couche rigide et dure puisse être altérée par une humidification de la deuxième couche susceptible de la faire varier dimensionnellement :
- que la première couche soit une couche d'usure, comprenant des fibres ligno-cellulosiques orientées suivant une direction principale,
- et que la deuxième couche de support comprend une succession de liteaux ou tasseaux mécaniquement résistants disposés les uns à côté des autres en présentant une direction d'allongement de préférence transversale par rapport à la direction principale d'orientation des fibres ligno-cellulosiques de la couche d'usure,
- et/ou que cette deuxième couche de support soit une couche en latté résineux.

Le choix du latté résineux combiné en particulier avec le traitement thermique précité de rétification optimise l'invention, avec un effet de synergie qui tire au mieux parti des avantages du latté résineux et du procédé connu de rétification, lequel comprend un chauffage à une température comprise entre 200°C et 300°C, pendant une durée au plus égale à 30 mn par cm d'épaisseur de matière traitée, permettant ainsi de réaliser des liaisons covalentes entre les chaînes macromoléculaires des constituants de la couche, cette rétification étant menée en pratique sous atmosphère inerte ou réductrice et avant liaison ensemble par voie chimique (typiquement par collage sous pression) des première et deuxième couches du panneau objet de l'invention.

Tout particulièrement si le traitement de la deuxième couche sous-jacente de type ligno-cellulosique consiste en ce traitement thermique de rétification, deux conséquences sont à noter dans l'invention :
- tout d'abord, en tant que face extérieure exposée, d'aspect des panneaux, ceux-ci pourront spécifiquement présenter directement la face extérieurement visible de leur couche d'usure et seront donc alors dépourvus de revêtement de protection, tel qu'une pellicule de cire, d'huile ou de vernis (pellicule qui à ce jour est quasi systématiquement présente). Dans ce cas, le traitement de rétification aura également été appliqué à cette couche d'usure ;
- par ailleurs, les seules couches liées entre elles d'un panneau seront avantageusement constituées par la couche d'usure qui recouvrira directement la deuxième sous-couche sous-jacente, excluant en particulier la présence d'une couche de contrebalancement sous cette deuxième couche, laquelle a été traitée thermiquement de manière qu'elle présente une destruction partielle de l'hémicellulose du bois qu'elle contient.

En outre, on pourra alors conseiller que la couche d'usure présente une épaisseur inférieure ou égale à 1,5 mm environ, à 10 % près, ce qui est notablement inférieur aux épaisseurs habituelles de la couche d'usure sur les panneaux traditionnels où les problèmes de réaction à l'humidité sont en partie compensés par la présente d'une couche d'usure épaisse (typiquement, de l'ordre de 2,5 mm).

Une description encore plus détaillée de l'invention va maintenant être fournie en référence aux dessins annexés dans lesquels :
- la figure 1 est une vue en coupe longitudinale d'un tronçon de panneau de revêtement conforme à l'invention, selon une première réalisation,
- la figure 2 est une alternative de réalisation, selon la même vue en coupe,
- la figure 3 est une autre alternative de réalisation, selon également la même vue en coupe, mais dans le cas d'un faux-plancher,
- et la figure 4 montre en perspective locale, avec coupe transversale (dans le sens de la largeur), deux panneaux adjacents conformes à l'invention et utilisables pour réaliser un plancher à pose flottante.

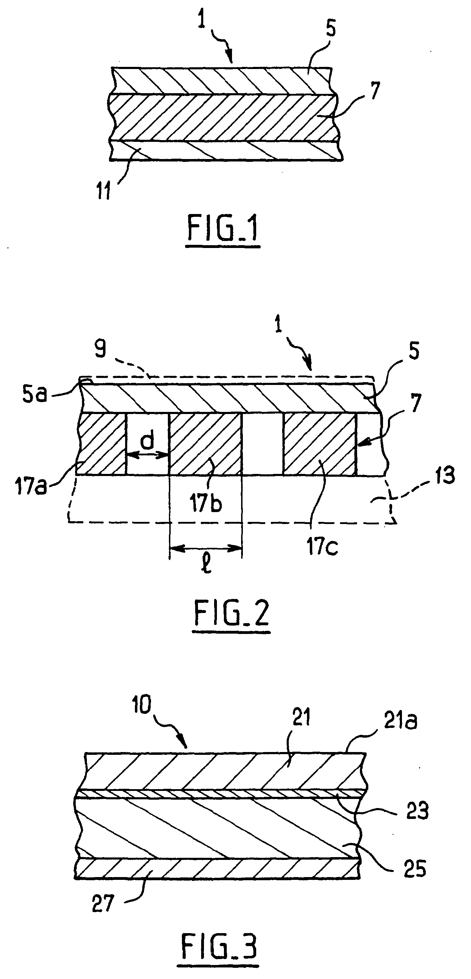

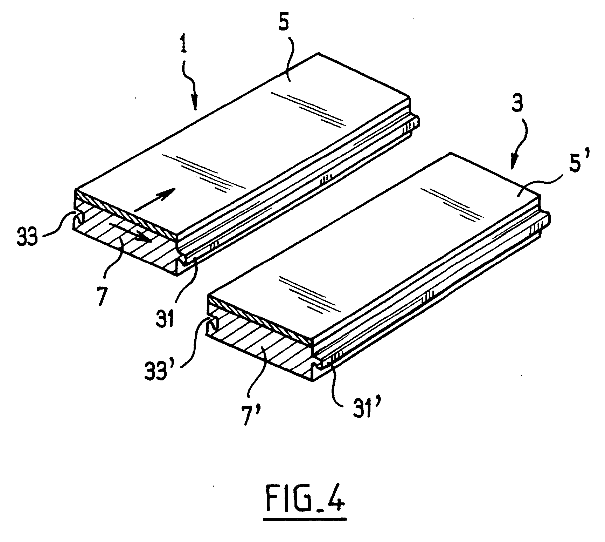

Sur les figures 1 et 2, on suppose qu'il s'agit d'un élément 1 (deux éléments 1 et 3 sur la figure 4) de parquet flottant en vrai bois comprenant une première couche (extérieure) supérieure 5 (5 et 5' sur la figure 4), rigide, dure, et une seconde couche de support 7 (7 et 7' sur la figure 4), qui soutient la couche 5, immédiatement sous elle.

Les deux couches 5 et 7 (5' et 7') sont liées ensembles chimiquement de manière étanche aux liquides (eau), de préférence par collage sous pression.

La couche 5, couramment appelée couche d'usure, est traditionnellement recouverte d'une pellicule repérée 9 sur la figure 2, telle qu'une pellicule de cire, d'huile ou de vernis, pour améliorer son aspect de surface extérieure et/ou pour sa protection.

Il s'agit notamment de protéger la couche 5 contre l'humidité ambiante, voire contre les liquides au contact desquels elle pourrait se trouver pendant son utilisation, une fois le revêtement posé.

Si le traitement anti-déformation prévu dans l'invention est opéré sur la matière des couches 5 et 7, on conseille de se dispenser de la pellicule 9, évitant ainsi une des opérations de mise en oeuvre finale du produit et les coûts afférents.

En l'absence d'une telle pellicule 9, la surface extérieure visible (ou surface d'aspect) 5a de la couche d'usure 5, sera donc la couche la plus extérieure des panneaux et sera la plus exposée (chocs, liquides, humidité de la pièce, ...).

La couche 5 est une couche continûment pleine, c'est-à-dire sans vide interne, y compris notamment sa surface extérieure 5a.

La couche d'usure est une couche ligno-cellulosique.

Il s'agit ici d'une couche en bois massif qui peut être d'une épaisseur inférieure à 1,65 mm, voire 1,5 mm, compte tenu du traitement anti-déformation appliqué.

Cette couche de support 7 peut être soit une couche uniformément pleine, comme sur la figure 1, soit être constituée par une succession de liteaux ou tasseaux 17a, 17b, 17c, ..., comme montrés sur la figure 2. Ces tasseaux sont disposés parallèlement les uns aux autres. Certains au moins peuvent être jointifs ou quasi jointifs deux à deux, même s'il est conseillé de les écarter les uns des autres, comme montré.

Pour favoriser la stabilité des panneaux, on notera que les fibres ligno-cellulosiques des couches 5, 7 (5', 7'), sont croisées, c'est-à-dire disposées sensiblement perpendiculairement entre les deux couches (voir les flèches sur la figure 4 pour le panneau 1).

De préférence, l'écartement d entre deux tasseaux sera inférieur à la largeur / de ces tasseaux, laquelle largeur (comme d'ailleurs l'écartement *d*) sera avantageusement constante dans le sens de la hauteur de la couche.

On pourra disposer sous la couche support 7 une autre couche 11 (voir figure 1) en un matériau acoustiquement absorbant : matière élastomérique (élastomère) ou mousse absorbante en particulier. Si elle doit participer à la tenue mécanique, une telle couche peut être armée de fibres synthétiques rigides. On peut également imaginer un voile non tissé de polyester ou de verre doublé d'une couche expansée ou en matériau viscoélastique (élastomère).

On peut également songer à doubler la couche 7, à l'opposé de la couche 5, par une première sous-couche de matière alvéolaire (telle que du liège) ou expansée, et une deuxième sous-couche plus dense et plus viscoplastique que la première (par exemple en liège additionné d'une polyoléfine chargée).

Dans le cadre de l'invention, une telle couche (ou de telles sous-couches) ne sont pas considérées comme indispensables pour obtenir un panneau stable dimensionnellement.

De la même manière, la couche 13 de la figure 2 est une couche optionnelle.

Il s'agit d'une couche de contrebalancement disposée directement sous la couche de support 7. Sur nombre de produits connus, elle est réalisée en bois ou en un matériau contenant une résine susceptible de stabiliser mécaniquement les flambages et autres déformations du panneau concerné.

C'est d'ailleurs parce qu'elle est optionnelle que la couche de contrebalancement 13 a été représentée en pointillés, comme d'ailleurs la pellicule 9, la couche 11 pouvant avoir son utilité s'il s'agit de diminuer le caractère sonore du panneau.

Comme on l'a compris, la couche principale dans le cadre de l'invention est spécifiquement la couche 7 (voire également la couche d'usure 5) en ce qu'il s'agit de la (des) couche(s) qui est (sont) traitée(s) contre l'humidité pour acquérir en particulier une stabilité dimensionnelle importante en cas d'une humidité telle qu'en l'absence d'un tel traitement, le panneau en lui-même varierait en dimensions, c'est-à-dire se déformerait.

Concernant cette couche 7, et dans le cas d'un vrai plancher comme sur les figures 1, 2 et 4, on conseille pour la couche 7 une réalisation sous la forme d'un latté résineux.

La réalisation d'un panneau en contreplaqué, deux plis contrecollés est également conseillée pour l'obtention d'éléments de panneaux à la fois peu onéreux, stables mécaniquement et résistants tant à l'usure qu'à la déformation, y compris dans l'hypothèse de l'installation du revêtement dans des pièces humides (salle de bains, ...).

Cette couche de support 7 peut être constituée soit en bois plein (couche continue ou tasseaux), soit à partir de fibres, copeaux, ..., associés entre eux par un liant chimique pour constituer un contreplaqué ou un aggloméré, en particulier. Favorablement, le lien est une colle thermodurcissable.

En termes d'épaisseur, si on envisage des couches d'usure 5 pouvant avoir une épaisseur de l'ordre de 1 mm à 1,3 mm, la couche de support 7 traitée conformément à l'invention aura de préférence une épaisseur de l'ordre de 5 mm à 20 mm (l'épaisseur des couches sur les figures ne sont donc pas à échelle).

Sur la figure 3, le panneau de revêtement 10 est un panneau de faux parquet également appelé "laminé".

Il comprend une couche supérieure rigide, dure et pleine, en résine, 21, présentant une face extérieure (supérieure) d'aspect, visible, continue, 21a. A l'opposé de cette face visible, la couche de résine 21 est doublée par une feuille intermédiaire décorative 23 (papier, bois, ...) donnant au produit son aspect visible à travers la couche supérieure 21 qui est par conséquent typiquement transparente. A l'arrière, la feuille décorative 23 est adossée à une seconde couche 25 rigide, de support de la couche supérieure 21, qui est donc située immédiatement derrière (sous) la feuille 23. La deuxième couche 25 est typiquement une couche contenant du bois, ou plus génériquement des fibres ligno-cellulosiques liées par une résine synthétique.

Eventuellement, la couche de support 25 peut être elle-même doublée par une couche supplémentaire arrière d'insonorisation 27 qui peut être identique à la couche 11 déjà présentée.

Concernant maintenant le traitement anti-humidité, il peut tout d'abord consister en un contact avec un composé de phénylméthane ou contenant du phénylméthane, en particulier du di-isocyate diphényle méthane. On peut en particulier traiter par vaporisation.

La manière d'opérer est la suivante : on réalise la couche concernée, par exemple 7 (ou 7') de la manière structurellement retenue : couche unique ou succession de tasseaux et on vaporise le produit de traitement sur les différents côtés de cette couche, donc au moins sur ses bords latéraux qui vont rester exposés, après assemblage des couches entre elles. De ce fait, si la surface inférieure de la couche 7 est dépourvue des sous-couches 11 et/ou 13, ou bien, pour la couche de support 25, de la sous-couche 27, on traitera cette surface inférieure. Après cela, les couches sont réunies entre elles pour constituer le panneau définitif.

Le résultat obtenu par cette application de l'agent de traitement consiste en une étanchéification en surface de la (des) couche(s) ainsi traitée(s). C'est pour cela que la liaison entre elles des différentes couches doit par ailleurs être réalisée de manière étanche aux liquides.

Pour l'application de l'agent de protection, une vaporisation par diffusion d'un gaz sous pression, en particulier via de l'air comprimé, en regard des différentes faces concernées des pièces, est conseillée.

Pour intéressant que soit un tel traitement chimique, la solution préférée dans l'invention consiste malgré tout dans un traitement de rétification.

Il s'agit alors en particulier de traiter thermiquement les fibres ligno-cellulosiques de la ou des couches concernées, en maintenant ces couches à une température prédéterminée au sein d'une chambre de traitement afin de détruire au moins partiellement l'hémicellulose des fibres. Ceci peut en particulier consister dans la surveillance, tout au long de l'étape de traitement, de la quantité existante d'au moins l'un des gaz résultant de la décomposition de l'hémicellulose, et à interrompre le traitement dès que cette quantité atteint une valeur sensiblement constante. Typiquement, le gaz concerné est de l'acide acétique et/ou du dioxyde de carbone, voire de l'oxyde de carbone.

L'élément détecteur utilisé peut être constitué d'un oxyde métallique permettant la détection des gaz réducteurs en cause (dioxyde d'étain ou de titane en particulier).

Ainsi, on va pouvoir détruire en partie l'hémicellulose des fibres sans pour autant porter atteinte à la structure des couches concernées, autrement dit sans détruire la lignine. Dans la pratique, après une étape de pré-traitement des couches à fibres ligno-cellulosiques en cause, et en particulier après un séchage ouvert, on va faire subir à ces pièces un chauffage et un maintien à une température comprise entre environ 200°C et 300°C (préférentiellement entre 230°C et 260°C) sous atmosphère de préférence d'un gaz inerte ou réducteur (azote ou gaz carbonique en particulier).

La durée de ce maintien en température sera typiquement comprise entre quelques dixièmes de seconde et de l'ordre de 45 mn.

Plutôt que de traiter les couches déjà constituées sous leurs formes industrielles définitives (couches continues, tasseaux, ...), il est à noter que l'on préférera rétifier la matière ligno-cellulosique originale se présentant sous forme fragmentée (fibres, particules, ...). Une fois le traitement effectué, on mettra le matériau rétifié à la forme voulue, en imprégnant les fibres, particules, ..., d'un polymère, et en particulier d'une résine permettant de faire durcir sous cette forme le matériau.

L'opération de rétification s'apparente à une pyrolyse. Pour favoriser la rétification, on conseille d'introduire, lors du traitement thermique, des initiateurs radicalaires dans le réacteur ou de les incorporer dans la matière à traiter.

Après traitement, la matière ou la couche est de couleur marron homogène dans la masse et en surface. Les propriétés mécaniques ont été améliorées. Le produit est plus dur qu'il ne l'aurait été sans traitement. On a ainsi non seulement stabilisé dimensionnellement là où les couches traitées, mais augmenté leur résistance à la compression et leur dureté. La tenue au feu a également progressé.

A noter également que même dans l'hypothèse d'une couche d'usure d'épaisseur inférieure à 1,5 mm, on ne verra pas de défaut de gonflement de la couche de support 7 ou 7' si celle-ci a été traitée, quand bien même les panneaux seraient disposés dans un environnement à taux d'humidité supérieur à 75 % d'humidité relative de l'air ou au contraire dans une atmosphère très sèche inférieure ou égale à environ 20 % d'humidité relative de l'air.

Une fois les panneaux traités ainsi réalisés, on va permettre à l'utilisateur de les agencer entre eux pour constituer un revêtement stable.

A cet égard, des moyens de liaison entre panneaux, tels que des languettes 31, 31' (voir figure 4) adaptées pour s'engager étroitement dans des rainures coopérantes 33', 33, seront avantageusement prévus sur au moins deux bords latéraux des panneaux.

Sur la figure 4, les deux côtés longitudinaux opposés des deux panneaux illustrés sont pourvus, pour l'un d'une languette longitudinale continue et, pour l'autre, d'une rainure complémentaire.

A noter que ces moyens de liaison peuvent en particulier consister en des moyens d'encliquetage ou de verrouillage mutuel, permettant un verrouillage élastique à force (snap-action system), démontable, entre deux panneaux adjacents.

## Revendications

1. Revêtement d'une surface, en particulier un sol, comprenant des panneaux adjacents (1, 3) adaptés pour être liés entre eux afin de constituer le revêtement de ladite surface, les panneaux présentant une face extérieure exposée, d'aspect (5a), comprenant :
- une première couche rigide, dure, (5, 5', 21),
- et au moins une deuxième couche sous-jacente ligno-cellulosique (7, 7', 23), mécaniquement résistante, rigide, de support de la première couche et liée à elle, **caractérisé en ce qu'**au moins la deuxième couche (7, 7', 23) des panneaux est une couche traitée chimiquement avec un agent anti-gonflement ou une couche rétifiée ayant été traitée thermiquement pour limiter les variations dimensionnelles de la(des) couche(s) en cas d'humidité susceptible d'entraîner des déformations sur une couche non traitée.

2. Revêtement selon la revendication 1, **caractérisé en ce que** :
- la première couche (5, 5') est une couche d'usure comprenant des fibres ligno-cellulosiques orientées suivant une direction principale,
- et la deuxième couche de support (7, 7'), qui incorpore elle-même des fibres ligno-cellulosiques, comprend une succession de liteaux ou tasseaux (17a, 17b, ...) mécaniquement résistants disposés les uns à côté des autres en présentant une direction d'allongement de préférence transversale par rapport à la direction principale d'orientation des fibres aux ligno-cellulosiques de la couche d'usure.

3. Revêtement selon la revendication 1 ou la revendication 2, **caractérisé en ce que** :
- la première couche est une couche d'usure (5, 5') comprenant des fibres ligno-cellulosiques,
- la deuxième couche de support (7, 7') est une couche de latté résineux.

4. Revêtement selon les revendications 1 et 2, ou les revendications 1 et 3, **caractérisé en ce que** :
- la couche d'usure (5, 5') est également une couche traitée chimiquement avec un agent anti-gonflement ou une couche rétifiée ayant été traitée thermiquement pour limiter les variations dimensionnelles de ladite couche en cas d'humidité susceptible d'entraîner des déformations sur une couche non traitée, et
- en tant que face extérieure exposée, d'aspect des panneaux, ceux-ci présentent directement la face (5a) visible extérieurement de la couche d'usure (5, 5') et sont donc dépourvus de revêtement de protection, telle qu'une pellicule de cire, d'huile ou de vernis.

5. Revêtement selon les revendications 1 et 2 ou les revendications 1 et 3, éventuellement en combinaison avec la revendication 4, **caractérisé en ce que** les seules couches liées entre elles d'un panneau pour assurer sa stabilité mécanique sont constituées par ladite couche d'usure (5, 5') recouvrant directement ladite deuxième couche sous-jacente (7, 7'), excluant ainsi la présence d'une couche de contrebalancement sous la deuxième couche, laquelle a été traitée thermiquement de manière que, rétifiée, elle présente une destruction partielle de l'hémicellulose du bois qu'elle contient.

6. Revêtement selon l'une quelconque des revendications précédentes, **caractérisé en ce que** la couche d'usure (5, 5') présente une épaisseur inférieure ou égale à 1,5 mm environ, à 10 % près.

7. Revêtement selon l'une quelconque des revendications 1 et 2, **caractérisé en ce que** la deuxième couche de support comprend des fibres ligno-cellulosiques liées entre elles par une colle thermodurcissable.

8. Procédé de fabrication d'un panneau pour un revêtement selon l'une quelconque des revendications précédentes, **caractérisé en ce que** :
- on réalise la première couche (5, 5', 21) comme une couche rigide et dure contenant des fibres ligno-cellulosiques, de manière à constituer une couche d'usure,
- on réalise la deuxième couche de support (7, 7', 25) avec un matériau de type ligno-cellulosiques constituant l'une des structures suivantes : couche continue ou succession de liteaux s'étendant parallèlement les uns aux autres, constitué(e)s de bois massif ou de fibres de bois compressées et/ou agglomérées, **caractérisé en ce que** la matière de la seconde couche est chauffée à une température comprise entre environ 200°C et 300°C, pendant une durée au plus égale à 30 mn/cm d'épaisseur, de manière à soumettre le matériau à une rétification consistant en la réalisation de liaisons covalentes entre les chaînes macromoléculaires des constituants du matériau, ladite rétification étant menée sous atmosphère inerte ou réductrice,
- puis on lie ensemble chimiquement, de préférence par collage sous pression, les première et deuxième couches.

9. Procédé selon la revendication 8, **caractérisé en ce que** la fabrication des panneaux de revêtement consiste exclusivement en l'obtention de panneaux à deux couches constituées par lesdites première et deuxième couches collées ensemble, sans couche de contrebalancement sous la deuxième couche (7, 7'), ni de préférence d'enduction de la surface extérieurement visible de la première couche (5, 5') par une pellicule d'aspect et/ou de protection, telle qu'une pellicule de vernis, de cire ou d'huile.

10. Procédé selon la revendication 8 ou la revendication 9, **caractérisé en ce que** les panneaux sont des panneaux lattés comprenant une succession de tasseaux adjacents (17a, 17b, ...), ces tasseaux avant d'être réalisés à leur forme définitive subissant un traitement thermique de rétification, après quoi ils sont mis en place les uns à côté des autres pour constituer la seconde couche (7), puis les première (5) et seconde (7) couches sont liées ensemble par collage sous pression.

## Patentansprüche

1. Beschichtung einer Oberfläche, insbesondere eines Bodens, mit nebeneinanderliegenden Platten (1,3), die geeignet sind, miteinander verbunden zu werden, um die Beschichtung der Oberfläche zu bilden, wobei die Platten eine äußere, freie Sichtfläche (5a) aufweisen, mit:
- einer ersten steifen, harten Schicht (5, 5', 21),
- und mindestens einer darunterliegenden aus Holzzellulose bestehenden, mechanisch widerstandsfähigen, zweiten Schicht (7, 7', 23) als Träger für die erste Schicht, mit der sie verbunden ist, **dadurch gekennzeichnet, daß** mindestens die zweite Schicht (7, 7', 23) der Platten eine mit einem Antiquell-Mittel chemisch behandelte Schicht oder eine retifizierte Schicht aufweist, die thermisch behandelt wurde, um die Maßveränderungen der Schicht(en) im Fall von Feuchtigkeit zu begrenzen, die imstande ist, Verformungen auf einer nicht behandelten Schicht mit sich zu bringen.

2. Beschichtung nach Anspruch 1, **dadurch gekennzeichnet, daß**:
- die erste Schicht (5, 5') eine Verschleißschicht ist, die Holzzellulosefasern aufweist, welche entlang einer Hauptrichtung ausgerichtet sind,
- und die zweite Trägerschicht (7, 7'), welche selbst Holzzellulosefasern inkorporiert, eine Folge von mechanisch widerstandsfähigen Leisten zum Verstärken oder Träger (17a, 17b ..) aufweist, die nebeneinander angeordnet sind, wobei sie eine Verlängerungsrichtung vorzugsweise quer zu der Hauptorientierungsrichtung der Holzzellulosefasern der Verschleißschicht aufweisen.

3. Beschichtung nach Anspruch 1 oder Anspruch 2, **dadurch gekennzeichnet, daß**:
- die erste Schicht eine Verschleißschicht (5, 5') mit Holzzellulosefasern ist,
- die zweite Trägerschicht (7, 7') eine Harzlattenschicht ist.

4. Beschichtung nach den Ansprüchen 1 und 2 oder den Ansprüchen 1 und 3, **dadurch gekennzeichnet, daß**:
- die Verschleißschicht (5, 5') ebenfalls eine mit einem Antiquellmittel chemisch behandelte Schicht oder eine retifizierte Schicht ist, welche thermisch behandelt wurde, um die Maßveränderungen der Schicht im Fall von Feuchtigkeit zu begrenzen, die imstande ist, Verformungen auf einer nicht behandelten Schicht mit sich zu bringen, und
- als äußere freie Sichtfläche der Platten diese direkt die sichtbare Seite (5a) außerhalb der Verschleißschicht (5, 5') aufweisen und also keine Schutzbeschichtung, wie zum Beispiel einen Film aus Wachs, Öl oder Lack, haben.

5. Beschichtung nach den Ansprüchen 1 und 2 oder den Ansprüchen 1 und 3, gegebenenfalls in Kombination mit Anspruch 4, **dadurch gekennzeichnet, daß** nur die Schichten, die miteinander mit einer Platte verbunden sind, um ihre mechanische Stabilität zu sichern, durch die Verschleißschicht (5, 5') gebildet sind, wobei direkt die zweite darunterliegende Schicht (7, 7') bedeckt wird und so das Vorhandensein einer Gegengewichtschicht unter der zweiten Schicht ausgeschlossen wird, welche thermisch derart behandelt wurde, daß sie, retifiziert, eine teilweise Zerstörung von Hemizellulose des Holzes aufweist, welches sie enthält.

6. Beschichtung nach einem der vorhergehenden Ansprüche, **dadurch gekennzeichnet, daß** die Verschleißschicht (5, 5') eine Dicke aufweist, die kleiner oder gleich etwa 1,5 mm bis auf 10% mehr oder weniger ist.

7. Beschichtung nach einem der Ansprüche 1 und 2, **dadurch gekennzeichnet, daß** die zweite Trägerschicht Holzzellulosefasern aufweist, die miteinander durch einen in Wärme aushärtenden Kleber verbunden sind.

8. Herstellungsverfahren einer Platte für eine Beschichtung nach einem der vorhergehenden Ansprüche, **dadurch gekennzeichnet, daß**:
- man die erste Schicht (5, 5', 21) als eine steife und harte Schicht herstellt, welche Holzzellulosefasern derart enthält, daß sie eine Verschleißschicht bildet,
- man die zweite Trägerschicht (7, 7', 25) mit einem Material vom Holzzellulosetyp unter Bildung einer der folgenden Strukturen herstellt: fortlaufende Schicht oder Folge von Leisten zum Verstärken, die sich parallel zueinander erstrecken und aus komprimiertem/n und/oder agglomeriertem/n massivem Holz oder Holzfasern gebildet sind, **dadurch gekennzeichnet, daß** das Material der zweiten Schicht auf eine Temperatur von zwischen etwa 200°C und 300°C für eine Dauer von mehr oder weniger gleich 30 mn/cm Dicke derart erwärmt wird, daß das Material einer Retifikation unterworfen wird, welche in der Realisierung kovalenter Verbindungen zwischen den makromolekularen Ketten der Komponenten des Materials besteht, und unter inerter oder reduzierender Atmosphäre durchgeführt wird,
- man dann vorzugsweise durch Kleben unter Druck die erste und zweite Schicht chemisch miteinander verbindet.

9. Verfahren nach Anspruch 8, **dadurch gekennzeichnet, daß** die Herstellung der Beschichtungsplatten exklusiv darin besteht, daß Platten mit zwei Schichten erhalten werden, welche aus der ersten und zweiten zusammengeklebten Schicht gebildet sind, ohne Gegengewichtsschicht unter der zweiten Schicht (7, 7') und vorzugsweise ohne Beschichten der außen sichtbaren Oberfläche der ersten Schicht (5, 5') mit einem Sicht- und/oder Schutzfilm, wie zum Beispiel einem Film aus Lack, aus Wachs oder aus Öl.

10. Verfahren nach Anspruch 8 oder nach Anspruch 9, **dadurch gekennzeichnet, daß** die Platten gelattete Platten sind, die eine Folge von aneinandergrenzenden Trägern (17a, 17b ...) aufweisen, wobei diese Träger, bevor sie in ihrer endgültigen Form hergestellt werden, eine thermische Retifikationsbehandlung erfahren, nach welcher sie nebeneinander angeordnet werden, um die zweite Schicht (7) zu bilden, und dann die erste (5) und die zweite (7) Schicht miteinander durch Kleben unter Druck verbunden werden.

## Claims

1. Covering for a surface, especially a floor, comprising adjacent panels (1, 3) which are suitable for being joined together in order to form the covering for said surface, the panels having an exposed outer show face (5a), which covering comprises:
- a first hard, rigid layer (5, 5', 21),
- and at least a second subjacent, rigid, mechanically strong, lignocellulosic layer (7, 7', 23) which serves to support the first layer and is joined thereto,
**characterised in that** at least the second layer (7, 7', 23) of the panels is a layer that has been chemically treated with an anti-swelling agent or is a retified layer that has been heat treated in order to limit the dimensional variations of the layer(s) in the event of humidity which is likely to cause deformation of an untreated layer.

2. Covering according to claim 1, **characterised in that**:
- the first layer (5, 5') is a wear layer comprising lignocellulosic fibres oriented in accordance with a principal direction,
- and the second, supporting layer (7, 7'), which itself incorporates lignocellulosic fibres, comprises a succession of mechanically strong battens or strips (17a, 17b, ...) which are arranged one beside the other with a direction of extension that is preferably transverse relative to the principal direction of orientation of the lignocellulosic fibres of the wear layer.

3. Covering according to claim 1 or claim 2, **characterised in that**:
- the first layer is a wear layer (5, 5') comprising lignocellulosic fibres,
- the second, supporting layer (7, 7') is a layer of resinous core board.

4. Covering according to claims 1 and 2, or claims 1 and 3, **characterised in that**:
- the wear layer (5, 5') is likewise a layer that has been chemically treated with an anti-swelling agent or is a retified layer that has been heat treated to limit the dimensional variations of said layer in the event of humidity which is likely to cause deformation of an untreated layer, and
- as the exposed outer show face of the panels, the panels have, directly, the externally visible face (5a) of the wear layer (5, 5') and are therefore without any protective covering, such as a film of wax, oil or varnish.

5. Covering according to claims 1 and 2 or claims 1 and 3, optionally in combination with claim 4, **characterised in that** the only layers of a panel that are joined together to ensure its mechanical stability are constituted by said wear layer (5, 5') covering directly said subjacent second layer (7, 7'), thus excluding the presence of a counterbalancing layer beneath the second layer, which has been heat treated so that, in retified form, it exhibits partial destruction of the hemicellulose of the wood contained therein.

6. Covering according to any one of the preceding claims, **characterised in that** the wear layer (5, 5') has a thickness less than or equal to about 1.5 mm, to within 10 %.

7. Covering according to either claim 1 or claim 2, **characterised in that** the second, supporting layer comprises lignocellulosic fibres bonded together by a thermosetting adhesive.

8. Process for the manufacture of a panel for a covering according to any one of the preceding claims, **characterised in that**:
- the first layer (5, 5', 21) is produced in the form of a hard, rigid layer comprising lignocellulosic fibres, in such a manner as to constitute a wear layer,
- the second, supporting layer (7, 7', 25) is produced using a lignocellulose-type material to form one of the following structures: continuous layer or succession of battens extending parallel with one another, composed of solid wood or of compressed and/or agglomerated wood fibres,
**characterised in that** the material of the second layer is heated to a temperature of approximately from 200°C to 300°C for a period not exceeding 30 minutes/cm of thickness, in order to subject the material to retification, which consists in producing covalent bonds between the macromolecular chains of the constituents of the material, said retification being carried out under an inert or reducing atmosphere,
- then the first and second layers are joined together chemically, preferably by bonding under pressure.

9. Process according to claim 8, **characterised in that** the manufacture of the covering panels consists solely in obtaining panels having two layers composed of said first and second layers bonded together, without a counterbalancing layer beneath the second layer (7, 7') and preferably without coating the externally visible surface of the first layer (5, 5') with a show and/or protective film, such as a film of varnish, wax or oil.

10. Process according to claim 8 or claim 9, **characterised in that** the panels are core board panels comprising a succession of adjacent strips (17a, 17b, ...), the strips having been subjected, before being produced in their final form, to heat treatment for retification, following which they are positioned next to one another in order to form the second layer (7), then the first layer (5) and the second layer (7) are joined together by bonding under pressure.
